# FASCICULE DE BREVET EUROPEEN

(11) **EP 2 739 115 B1**
(45) Date de publication et mention de la délivrance du brevet: **25.04.2018**
(21) Numéro de dépôt: 13195268.1
(22) Date de dépôt: 02.12.2013
(51) Int. Cl.: H04W 52/02, H04W 24/10, H04W 84/20

(54) **Procede de communication, stations emettrice et receptrice et programmes d'ordinateur associes**
Kommunikationsverfahren, Sende- und Empfangsstationen und entsprechende Computerprogramme
Communication method, related transmission and reception stations and computer programs

(30) Priorité: 03.12.2012 FR 1261558
(43) Date de publication de la demande: 04.06.2014
(73) Titulaire: Schneider Electric Industries SAS, 92500 Rueil-Malmaison (FR)
(72) Inventeur: Nucci, Philippe, 38360 Sassenage (FR)
(74) Mandataire: Lavoix

(56) Documents cités:
- EP-A1- 1 737 162
- US-A1- 2004 023 651
- US-A1- 2006 067 232
- BANERJEE S ET AL: "A clustering scheme for hierarchical control in multi-hop wireless networks", PROCEEDINGS IEEE INFOCOM 2001. CONFERENCE ON COMPUTER COMMUNICATIONS. TWENTIETH ANNUAL JOINT CONFERENCE OF THE IEEE COMPUTER AND COMMUNICATIONS SOCIETY (CAT. NO.01CH37213); [PROCEEDINGS IEEE INFOCOM. THE CONFERENCE ON COMPUTER COMMUNICATIONS], PISCAT, vol. 2, 22 avril 2001 (2001-04-22), pages 1028-1037, XP010538791, DOI: 10.1109/INFCOM.2001.916296 ISBN: 978-0-7803-7016-6

## Description

La présente invention concerne les techniques de communication utilisées dans les réseaux de télécommunications, particulièrement, mais non exclusivement, dans les réseaux ad hoc.

Les réseaux ad hoc sont des réseaux de télécommunication dépourvus d'infrastructure fixe. Un certain nombre de stations sans fil équipées de moyens d'émission et/ou réception radio et de protocoles adéquats forment des noeuds d'un réseau ad hoc.

Ces stations peuvent prendre la forme d'ordinateurs fixes ou portables, d'ordinateurs de poche, de téléphones mobiles, de véhicules, d'appareils électroménagers, etc. Elles peuvent en outre être associées à des modules tels que des capteurs ou des actionneurs.

Un réseau ad hoc de capteurs permet ainsi d'effectuer de la collecte d'informations en vue, par exemple, de surveiller ou de contrôler des installations.

En général, les noeuds sont soit alimentés par des piles dont le remplacement ou le rechargement est coûteux et difficile, voire impossible, soit alimentés à l'aide d'une technique de récupération d'énergie sans batterie. L'économie d'énergie est donc un facteur crucial dans de tels réseaux.

Par ailleurs, une installation de canalisations électriques préfabriquées est un exemple d'installation nécessitant une surveillance en température en une multitude de points afin de contrôler son état.

On constate fréquemment un échauffement anormal des zones de jonction entre deux portions successives de canalisation, dû principalement à un serrage insuffisant des boulons de la jonction par l'installateur. Les solutions actuelles face à ces problèmes d'échauffement comprennent des opérations de maintenance préventive consistant à resserrer systématiquement les boulons, et des opérations d'inspection des installations à l'aide de caméras thermiques, permettant de visualiser les zones d'échauffement anormal.

Or ces techniques présentent certains inconvénients : elles sont très longues et compliquées à mettre en place du fait du nombre important de jonctions à vérifier et de la disposition des canalisations qui peuvent être difficilement accessibles : en hauteur, sous le plancher, sous des faux plafonds, etc.

De plus, la fiabilité des mesures thermographiques dépend de l'environnement de mesure (présence de poussières, de graisses, etc), ce qui rend les interprétations de l'état en température des canalisations peu précises.

Il existe donc un besoin de recueillir, en provenance de multiples points disposés le long de canalisations électriques, des informations relatives aux températures relevées en ces multiples points.

On connaît par ailleurs le document EP 1 737 162 A1 décrivant une technique de reconstruction d'un arbre en cas de déconnexion d'un noeud dans un réseau de noeuds.

Suivant un premier aspect, l'invention propose un procédé de communication, sur un canal radio dans un réseau comportant un noeud principal et une pluralité de noeuds secondaires de télécommunications, tel que défini par la revendication 1. Un tel procédé fournit de bonnes performances en terme de rapidité de transmission et de consommation d'énergie, particulièrement dans le cas d'un réseau linéaire, typiquement un réseau dans lequel les noeuds sont disposés au niveau de jonctions des canalisations électriques.

Dans un mode de réalisation, le procédé de communication comprend l'une ou plusieurs des caractéristiques suivantes :
- en vue de transmettre une information au noeud principal, ladite information est émise par ledit noeud secondaire exclusivement à destination dudit noeud père ;
- ledit noeud secondaire émet périodiquement un message de balise sur le canal radio indiquant un nombre de bonds radio le séparant du noeud principal égal au nombre de bonds radio séparant le noeud principal de son noeud père plus 1 ;
- pour émettre sur le canal radio ladite information à destination dudit noeud père, le noeud fils détecte un message de balise émis périodiquement par son noeud père définissant le début d'une plage temporelle où il est propre à recevoir des informations du noeud fils, le noeud fils transmettant les informations au noeud père pendant cette plage ;

- le noeud fils émet un message de balise périodiquement définissant le début d'une plage temporelle où il est propre à recevoir des informations d'un noeud de son voisinage radio ;
- en vue de détecter l'émission à une première fréquence donnée de messages de balise par des noeuds dans son voisinage radio, et une période type de longueur égale à une période inverse de la première fréquence étant découpée en plusieurs portions, au moins une portion est écoutée par ledit noeud secondaire avec au moins une période de décalage par rapport à l'écoute d'une autre portion, ledit noeud secondaire étant mis en veille au moins pendant une partie du temps séparant les écoutes des deux portions ;
- une nouvelle portion est écoutée dès que ledit noeud secondaire dispose d'un niveau d'alimentation suffisant pour l'écoute de ladite portion ;
- la taille d'au moins une portion est fonction du niveau courant d'alimentation dudit noeud ;
- le procédé est mis en oeuvre pour la surveillance thermique de canalisations électriques, tel que les noeuds sont localisés au niveau de jonctions de canalisations électriques, et comprennent en outre au moins un capteur de température, les informations comportant des données indiquant au moins des températures mesurées par lesdits capteurs.

Suivant un deuxième aspect, l'invention propose une station émettrice et réceptrice, pour former un noeud apte à émettre et recevoir sur un canal radio de communication, le noeud appartenant à un réseau comportant un noeud principal et une pluralité de noeuds secondaires de télécommunications, tel que définie par la revendication 9. Dans un mode de réalisation, la station émettrice et réceptrice comprend l'une ou plusieurs des caractéristiques suivantes :
- elle comprend, en vue de transmettre une information au noeud principal, des moyens d'émission de ladite information, par ledit noeud secondaire, exclusivement à destination dudit noeud père ;
- elle comprend des moyens d'émission périodique d'un message de balise sur le canal radio, indiquant un nombre de bonds radio la séparant du noeud principal égal au nombre de bonds radio séparant le noeud principal de son noeud père plus 1 ;
- elle comprend, pour émettre sur le canal radio ladite information à destination dudit noeud père, des moyens de détection d'un message de balise émis périodiquement par son noeud père, définissant le début d'une plage temporelle où il est propre à recevoir des informations de la station, la station transmettant les informations au noeud père pendant cette plage.
- elle comprend des moyens d'émission d'un message de balise périodique définissant le début d'une plage temporelle où elle est propre à recevoir des informations d'un noeud de son voisinage radio ;
- elle comprend, en vue de détecter l'émission à une première fréquence donnée de messages de balise par des noeuds dans son voisinage radio, et une période type de longueur égale à une période égale à l'inverse de la première fréquence étant découpée en plusieurs portions, des moyens d'écoute d'au moins une portion par ledit noeud secondaire avec au moins une période de décalage par rapport à l'écoute d'une autre portion, ledit noeud secondaire étant mis en veille au moins pendant une partie du temps séparant les écoutes de deux portions ;
- elle comprend des moyens d'écoute d'une nouvelle portion dès qu'elle dispose d'un niveau d'alimentation suffisant pour l'écoute de la dite portion ;
- la taille d'au moins une portion est fonction du niveau courant d'alimentation de la station ;
- les informations transmises par le noeud père comprennent une adresse d'identification du noeud fils sur le réseau ;
- elle est adaptée pour la surveillance thermique de canalisations électriques, est localisée au niveau d'une jonction de canalisation électrique, et comprend en outre au moins un capteur de température, les informations comportant des données indiquant au moins des températures mesurées par lesdits capteurs.

Suivant un troisième aspect, l'invention propose un programme d'ordinateur, à installer dans une station émettrice et réceptrice pour former un noeud apte à émettre sur un canal radio, le noeud appartenant à un réseau comportant un noeud principal et une pluralité de noeuds secondaires de télécommunications, ledit programme comprenant des instructions pour mettre en oeuvre, lors d'une exécution de programme par des moyens de traitement de ladite station émettrice et réceptrice, les étapes d'un procédé suivant le premier aspect de l'invention.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une vue éclatée en perspective d'une partie d'une installation de canalisations électriques au niveau d'une jonction électrique ;
- la figure 2 représente schématiquement une station d'émission-réception selon l'invention ;
- la figure 3 est un schéma explicatif de la transmission de données entre un noeuds père et un noeuds fils ;
- la figure 4 est un organigramme d'un procédé de communication conforme à l'invention ;
- la figure 5 est un schéma explicatif de la transmission de données de proche en proche entre noeuds ;
- la figure 6 est un schéma explicatif illustrant une opération de recherche de balises pour un noeud secondaire ;
- la figure 7 illustre le référentiel des décalages par rapport au noeud principal.

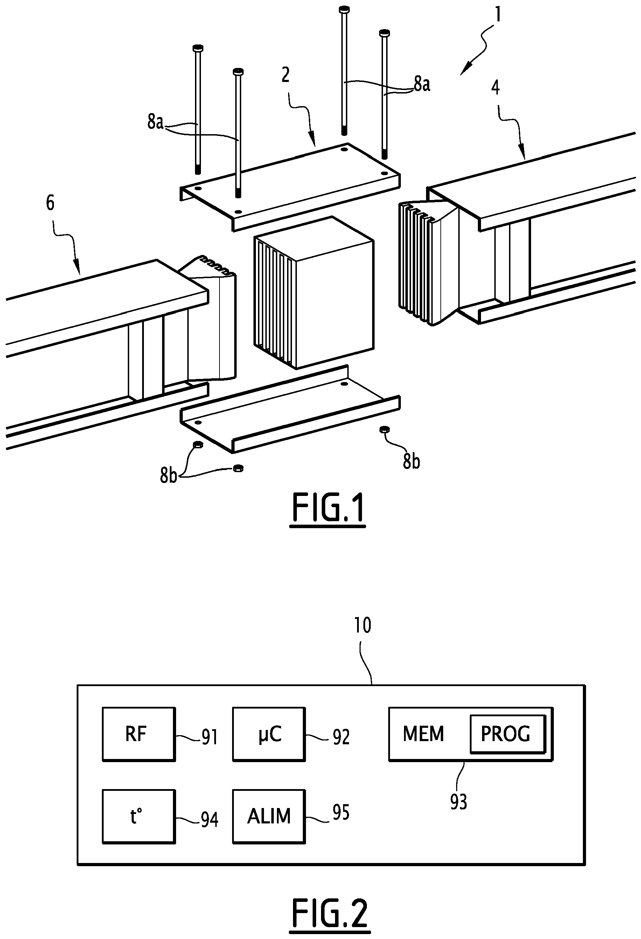

Sur la figure 1 est représentée, dans un mode de réalisation de l'invention, une partie 1 d'une installation de canalisations électriques au niveau d'une jonction électrique 2 raccordant, à l'aide de boulons 8a, 8b, un premier segment 4 de canalisation et un deuxième segment 6 de canalisation électrique.

Lors de l'installation des canalisations électriques, les différents segments, analogues aux premier 4 et deuxième 6 segment, sont insérés dans des jonctions, analogues à la jonction 2. Puis un serrage de boulons à tête sécable, analogues aux boulons 8a, 8b, est effectué à l'aide d'une clé dynamométrique afin d'assurer la fixation des deux segments à raccorder, ainsi que le passage du courant d'un segment à l'autre. Un mauvais serrage au niveau de la jonction 2 se traduit par une qualité de contact dégradée en une zone de la jonction, ayant pour effet d'augmenter la densité de courant et entraînant alors un échauffement anormal au niveau de la jonction 2.

La canalisation électrique considérée est par exemple d'une longueur de 400 m et comprend par exemple une jonction tous les 4 m, soit une centaine de jonctions 2.

Dans un mode de réalisation de l'invention, chacune de ces jonctions 2 est munie d'une station 10 qui lui est associée, et qui forme un noeud de télécommunication d'un réseau de télécommunication selon l'invention.

Dans le cas considéré, chaque station 10 associée à une jonction est en outre adaptée pour surveiller l'état thermique de la jonction qui lui est associée et pour transmettre des informations relatives à cet état thermique à destination d'une station particulière 10, ou noeud particulier, qui collecte toutes les informations en provenance des stations de la canalisation électrique. Les informations issues des mesures d'un noeud donné comportent un identifiant dudit noeud.

Ce noeud 10 particulier est appelé noeud principal 10a. Il peut ou non être associé lui aussi à une jonction. Les autres noeuds du réseau, qui transmettent des informations à destination du noeud principal 10a, sont appelées noeuds secondaires 10b.

En référence à la figure 2, chaque noeud, appelé encore station, 10 comprend des moyens de réception et d'émission radiofréquence 91, sur un canal radio partagé 14, de messages émis par, ou vers, des noeuds de son voisinage radio.

Une station 10 comporte en outre un microcalculateur 92, apte à exécuter des instructions logicielles, et une mémoire 93. Un programme PROG comprenant des instructions logicielles est notamment stocké dans la mémoire 93.

Une station 10 comporte en outre un module d'alimentation électrique 95, adapté pour alimenter les différents éléments de la station 10.

Ce module d'alimentation électrique 95, dans le cas des noeuds secondaires 10b, est, par exemple, adapté pour transformer l'énergie vibratoire et/ou thermique reçue en énergie électrique.

Le module d'alimentation 95 au noeud principal 10a, comporte, ou est relié, à une source d'énergie qui lui fournit à tout instant une énergie électrique, par exemple au réseau électrique.

Dans le cas d'un noeud secondaire 10b et le cas échéant du noeud principal 10a, la station 10 comporte en outre un capteur thermique 94 apte à mesurer régulièrement la température locale de la jonction associée.

Dans un mode de réalisation, la station 10 est en outre adaptée pour traiter des mesures de températures effectuées par le capteur thermique 94 et en fonction de la comparaison de ces mesures traitées et d'un seuil par exemple, générer une alerte, insérée, avec l'identifiant de la station 10, dans les informations à transmettre vers le noeud principal 10a..

Chaque noeud 10 est apte à communiquer directement avec un autre noeud 10 de son voisinage radio à l'aide d'un procédé de communication conforme à l'invention, s'appuyant sur un protocole de communication 802.15.4 défini par l'institut des ingénieurs électriciens et électroniciens, appelé IEEE, et s'appliquant aux réseaux sans fils, la communication se faisant sur le canal radio 14 partagé, à une fréquence donnée.

La fréquence choisie pour la communication est, par exemple, comprise entre entre 2400 MHz et 2483.5 Mhz et est, dans le cas considéré égale, dans le spectre radio du 2,4GHz ISM (Industrial Scientific Medical, License Free).

Le procédé conforme à l'invention s'appuie notamment, sur les couches PHY et MAC du protocole 802.15.4., et met en oeuvre des opérations d'émission et réception qui sont synchronisées entre les noeuds 10 à l'aide de balises 16 émises à chaque période T par les noeuds 10.

L'ensemble des étapes décrites ci-dessous sont mises en oeuvre par les noeuds 10 suite à l'exécution d'instructions logicielles du programme d'ordinateur PROG sur les microcalculateurs 92 des noeuds.

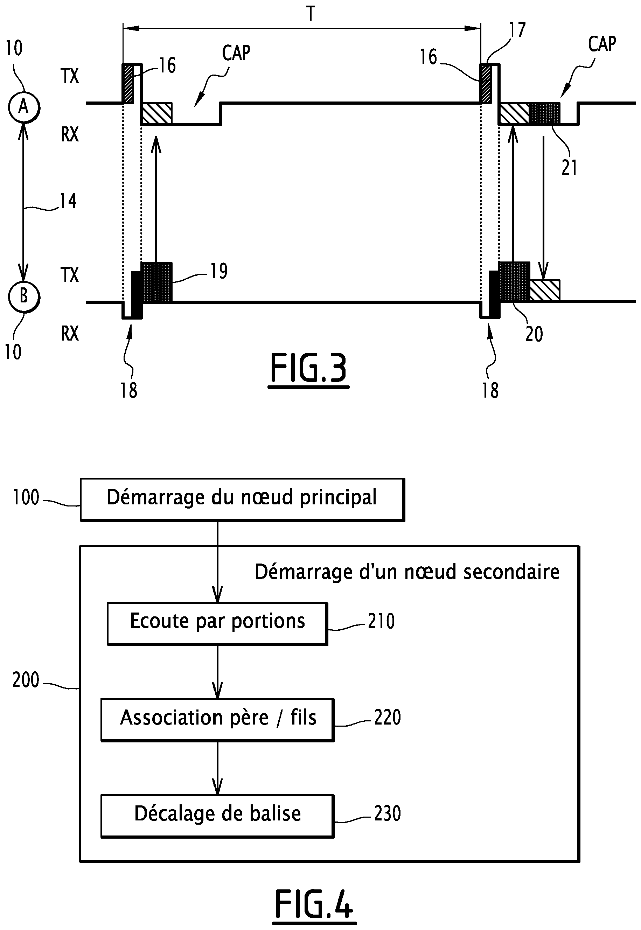

En référence à la figure 3, la transmission d'informations entre un noeud père 10, référencé A et un noeud fils 10, référencé, B, la définition des termes de père et fils étant fournie plus loin, se fait selon une communication montante, c'est-à-dire du noeud fils B vers le noeud père A, et une communication descendante, c'est-à-dire du noeud père A vers le noeuds fils B.

Un noeud fils B est adapté pour écouter le canal radio 14 au moment prédéterminé de l'émission d'un signal de balise 16 par le noeud père A et pour détecter l'émission de cette balise 16 (ce qui correspond à l'opération de « beacon tracking » du protocole 802.15.4).

Cette balise 16 émise par le noeud père A est un signal de départ pour un noeud fils B du noeud A, pour qu'il transmette des informations au noeud A. Elle comporte plusieurs champs de données, notamment un identifiant du réseau PANId, un identifiant du noeud A ayant émis la balise et d'autres informations décrites ci-après.

En effet, le noeud B émet des informations 19 vers son noeud père A après l'émission d'une balise 16 par le noeud A, dans une fenêtre de temps nommée CAP (en anglais «Contention Access Period »). Afin d'éviter d'éventuelles collisions entre des messages, il vérifie préalablement, avant d'émettre, que le canal 14 n'est pas occupé, en faisant une écoute 18 suivant la méthode d'accès CSMA/CA (en anglais « Carrier Sense Multiple Access with Collision Avoidance ») définie par l'IEEE.

Le noeud père A écoute les messages qui peuvent lui être envoyés par chacun de ses noeuds fils B dans la CAP qui succède à l'émission de la balise 16 émise par le noeud A.

Le protocole 802.15.4 prévoit en outre un mécanisme qui permet à un noeud père A non pas uniquement de recevoir des messages d'un noeud fils B, mais également de lui en envoyer.

Ainsi lorsque le noeud père A doit transmettre des informations à un noeud fils B, le noeud A indique dans la balise 16 qu'il va émettre des informations 21 disponibles pour le noeud fils B (cf. indication 17 sur la figure 3). Les informations restent alors stockées dans le noeud A. Le noeud fils B concerné émet alors une commande 20 dans la CAP suivant l'émission de la balise 16 ce qui provoque l'émission par le noeud A des informations 21, le noeud B se mettant en réception de ces informations 21 suite à la transmission de sa commande 20.

Cette communication est qualifiée d'indirecte car le message 21 contenu dans le noeud A n'est pas directement transmis au noeud B. Un tel mode de communication descendante, bien qu'offrant des débits moins élevés du fait de cette communication indirecte est bien adapté au cas considéré, car le flux de données descendant est bien plus réduit que le flux de données montant.

L'organigramme de la figure 4 présente des étapes 100, 200, 210, 220, 230 d'un procédé de communication dans un mode de réalisation de l'invention.

Lors d'une étape 100 de démarrage du noeud principal 10a, ce dernier s'assure qu'il n'existe pas sur le canal 14 affecté au réseau du noeud principal 10a, auquel un identifiant PANId caractérisant ce réseau, a été affecté, un autre réseau émettant avec un même identifiant PANId.

Pour ce faire, le noeud principal 10a effectue une écoute passive afin de vérifier qu'il ne reçoit aucune balise 16 comprenant cet identifiant.

Le noeud principal 10a émet alors des balises 16 espacés d'une période T, dans lequel il s'identifie en tant que noeud principal ou en anglais « PAN coordinator », conformément au protocole 802.15.4.

Lors de son démarrage 200, tout noeud secondaire 10b effectue un certain nombre d'étapes 210, 220, 230 :
- une étape 210 préalable d'écoute ayant pour but de scanner le canal 14 pendant une durée équivalente à une période T complète, et de détecter les balises 16 émises sur le canal 14 et ainsi déterminer les noeuds présents dans son voisinage radio ;
- puis dans une étape 220, le noeud secondaire 10b détermine un unique noeud père auquel il transmettra des informations 19 destinées au noeud principal 10a ;
- puis dans une étape 230, le noeud secondaire 10b détermine un décalage à opérer entre son propre signal de balise et le signal de balise de son père, puis il émet à son tour à chaque période T, une balise 16.
- Une fois ces étapes de démarrage réalisées, le noeud secondaire 10b peut fonctionner de manière opérationnelle comme décrit par exemple en référence à la figure 3.

Ces différentes étapes sont détaillées ci-après.

Un certain nombre seulement de noeuds secondaires 10b sont aptes à communiquer directement avec le noeud principal 10a : il s'agit des noeuds secondaires 10b qui sont situés à portée radio du noeud principal 10a.

On définit le rang d'un noeud 10 comme étant le nombre de bonds radio séparant ce noeud 10 du noeud principal 10a.

Ainsi, le noeud principal 10a est de rang nul. Les noeuds 10b secondaires qui reçoivent les balises 16 du noeud principal 10a lorsqu'ils mettent en oeuvre une étape 210 sont de rang 1.

Les noeuds secondaires 10b qui reçoivent, au cours de l'étape 210 qu'ils effectuent au démarrage, les balises 16 d'un noeud de rang 1 sans recevoir les balises 16 du noeud principal 10a, sont de rang 2, etc.

Ainsi le transfert d'une information 19 d'un noeud secondaire 10b de rang strictement supérieur à 1 vers le noeud principal 10a passe par des noeuds 10b intermédiaires de rang décroissant de 1 en 1.

Suivant l'invention, chaque noeud 10 inclut son rang dans les signaux balises 16 qu'il émet.

Ainsi, lorsque le noeud 10b effectue une écoute 210 du canal 14 équivalent à une période T, il reçoit les balises 16 de tous les noeuds 10 émettant dans son voisinage réseau, chacune de ces balises 16 indiquant le rang du noeud 10 l'ayant émis.

Dans l'étape 220, le noeud secondaire 10b sélectionne alors en tant que noeud père, parmi ces noeuds 10 de son voisinage radio, celui qui a émis la balise 16 indiquant un rang minimum. Le rang que le noeud 10b émet ensuite dans ses propres balises 16 sera égal au rang de son père, plus un.

Dans un mode de réalisation, le choix du père parmi plusieurs noeuds 10 par le noeud donné est fonction du rang desdits noeuds 10, et/ou d'indicateurs de la qualité de la communication entre le noeud donné et chacun des noeuds 10 et/ou d'une information présente dans la balise transmise par chacun desdits noeuds 10, indiquant le décalage entre son signal de balise et le signal de balise émis par son propre père (un père présentant le plus faible décalage de balise par rapport à celle de son père sera par exemple choisi en priorité, donnant lieu à une collecte plus rapide des information par le noeud principal).

Une fois que le noeud secondaire 10b a choisi son noeud père, il passe dans un mode de suivi des balises. Ce mode consiste à se mettre en veille pour ne se réveiller qu'au moment prédéterminé de l'émission des balises 16 de son noeud père afin d'échanger des données avec le noeud père dans la fenêtre CAP du noeud père, ou pour ne se réveiller qu'au moment de l'émission de ses propres balises 16 afin d'échanger des données, pendant sa propre fenêtre CAP, avec son ou ses noeuds fils.

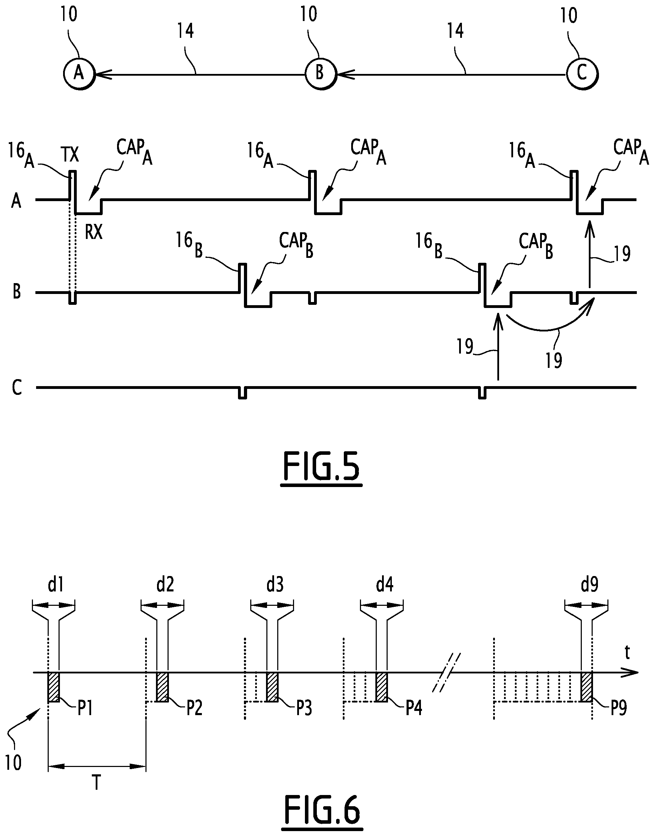

La figure 5 illustre le transfert des données depuis un noeud C (rang K+1), vers son noeud père B (rang K), et de là vers le noeud A (rang K-1) père du noeud B, ces données étant ainsi relayées de fils en père jusqu'au noeud principal 10a.

Le noeud B émet des balises 16_{B} permettant de caler ses échanges avec son ou ses noeuds fils, dont le noeud C. Le noeud C scrute l'émission des balises 16_{B} par son noeud père B, afin de transmettre des informations à transmettre 19 pendant les fenêtre CAP_{B} suivant ces balises 16_{B}.

Dans un mode de réalisation, l'étape de balayage 210 au démarrage d'un noeud secondaire 10b est réalisée de manière à économiser l'énergie disponible en réalisant une écoute équivalente à une période T par portion.

En référence à la figure 6, le noeud 10b écoute, à partir du temps t0, le canal 14 afin de détecter l'ensemble des balises 16 émise par les noeuds à portée radio non pas sur une période T complète, mais il écoute pendant plusieurs périodes T des portions P1 à Pn, qui modulo T, permettent de parcourir l'équivalent d'une période complète. Chaque portion Pi dure un temps dᵢ. La durée di est strictement inférieure à T. Entre deux portions d'écoute consécutives, le noeud 10b se met en veille afin que le module d'alimentation 95 se recharge en énergie.

Pendant la première période T s'écoulant à partir de t0, le noeud 10b écoute le canal 14 pendant une portion P₁, de t0 à t0+d₁, pour détecter les balises émises. Puis il se met en veille pour ne se réveiller pendant le deuxième période s'écoulant à compter de t0, qu'à t0+T+d₁ et écouter le canal 14 pendant une portion P₂, de t0+T+d₁ à t0+T+d₁+d₂, avant de se remettre en veille.

Ainsi, pour i=1 à n, ces étapes sont réitérées : le noeud 10b se met en veille suite à l'écoute de la portion _{Pi-1} pour ne se réveiller pendant le i^{ème} période s'écoulant à compter de t0, qu'à t0+T+d₁...+dᵢ₋₁, et écouter le canal 14 pendant la portion Pᵢ, de t0+T+ d₁...+dᵢ₋₁ à t0+T+ d₁...+dᵢ₋₁+dᵢ, avant de se remettre en veille.

Dans le cas représenté en figure 6, n= 9, dᵢ= d constante pour i= 1 à 9.

En pratique, la durée d'écoute est fortement rallongée : avec des portions d'écoute de 15ms, il faut 17 mn pour écouter complètement une période entre deux balises 16 dont l'émission est séparée de 4s.

En variante, la portion à écouter est définie par la mise en oeuvre d'un algorithme de balayage par dichotomie.

En variante, l'écoute ne se fait pas avec une portion écoutée par période T, mais le noeud 10b réalise l'écoute d'une nouvelle portion Pᵢ dès qu'il a accumulé suffisamment d'énergie pour écouter une telle portion P de durée dᵢ. Dans cette variante, l'écoute globale est plus rapide mais la gestion de la mémorisation des portions déjà écoutées, ou à écouter, est plus complexe.

En variante encore, la durée dᵢ d'écoute est variable et par exemple dépendante de l'énergie disponible dans le noeud 10b réalisant l'écoute. Dans cette variante, l'écoute globale est plus rapide.

Chaque noeud est identifié par une adresse unique sur 64 bits, dite adresse étendue.

Afin de limiter le volume de données échangées notamment du fait de l'insertion de l'identifiant d'un noeud dans les balises qu'il émet ou dans les données collectées par le noeud principal représentatives des mesures de températures effectuées par le noeud, les noeuds qui intègrent le réseau sont identifiés par une adresse plus courte, propre au réseau et affectée par le noeud principal 10a. Une fois qu'un noeud a élu un père, il demande l'affectation d'une adresse courte relayée au noeud principal 10a, qui la lui transmet, en retour.

Le noeud secondaire 10b peut alors émettre à son tour des balises 16 et des données, en utilisant cette adresse courte.

Dans un mode de réalisation de l'invention, l'instant d'émission des balises 16 par le noeud secondaire 10b considéré, est choisi dans une étape 230, en respectant certaines règles, de façon alternative ou combinée, qui sont exposées ci-dessous.

Un noeud 10b ne peut pas émettre de balise au même moment que son père, car il doit à ce moment être à l'écoute des émissions de son père. Donc le décalage δ entre l'émission par le noeud père de sa balise et, l'émission par le noeud secondaire 10b, doit être strictement inférieur à T et strictement supérieur à zéro.

Le noeud secondaire 10b exclut donc de la liste des décalages potentiels parmi lesquels sélectionner son décalage, celui correspondant à son propre père,

Le noeud secondaire 10b ne doit pas non plus émettre de balise 16 au moment où des noeuds 10 qui à sont à l'écoute et à portée radio, en train de suivre une émission de balise 16 d'un autre noeud car l'émission d'une balise 16 se fait sans CSMA/CA préalable, et le signal reçu serait alors un mélange de deux balises 16 (on considère que la portée radio est la même en émission et en réception).

Pour éviter ce type de conflit, chaque noeud 10 indique en outre dans sa balise 16, le décalage par rapport à sa propre balise, de la balise émise par son père. Ainsi, une fois qu'un noeud 10 a effectue son écoute initiale de balises 16 dans l'étape 210, il connaît, pour tous les noeuds 10 qui sont à sa portée, la liste de ces décalages à éviter. Le noeud secondaire 10b exclut donc de la liste des décalages potentiels, ceux correspondant aux pères des noeuds se trouvant dans sa portée radio

Une fois exclus les décalages δ déjà utilisés par les voisins immédiats et au second ordre (une conséquence est que des informations émises par un noeud fils dans la CAP de son père, ne sont reçues que par le père), il peut rester beaucoup de décalages δ libres possibles, et un choix judicieux de ces décalages δ permet de remonter les données au noeud principal 10a le plus rapidement possible.

Afin d'éviter de perturber des noeuds cherchant à rejoindre le réseau et qui seraient à portée radio de deux noeuds émettant leur balise en même temps, les décalages correspondant aux instants d'émission des balises des noeuds à portée radio du noeud secondaire considéré sont exclus de la liste des décalage potentiels.

Pour éviter une consommation inutile (réception d'un signal balise inutile) et une perte de bande passante (réduction des moments dans une fenêtre CAP où les autres noeuds peuvent émettre), le décalage doit être tel que la balise émise par le noeud secondaire considéré soit en-dehors des fenêtres CAP des noeuds à sa portée radio.

La longueur du décalage est choisie égale à un facteur entier de la durée D égale à la somme de la durée d'émission d'une balise et de la durée d'une fenêtre CAP et l'unité choisie pour la mesurer a pour unité cette durée D.

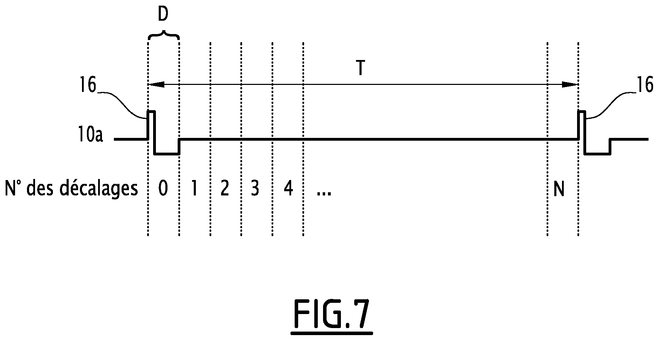

En référence à la figure 7, chacun des décalages est ainsi numéroté entre 0 (qui correspond à l'instant d'émission par le noeud principal 10a de sa balise 16) et N, égal à la valeur entière du quotient de T par D. Les numéros indiqués sur la figure 7 correspondent au repère absolu (i.e. ayant pour origine le décalage du noeud principal 10a).

Dans les balises, les décalages peuvent être suivant les modes de réalisation indiqués en absolu. Un décalage du père d'un noeud indiqué dans la balise du noeud peut dans un mode de réalisation être indiqué dans un repère relatif audit noeud (i.e. ayant pour origine le décalage dudit noeud).

Une fois exclus les décalages indiqués ci-dessus, il peut rester beaucoup de valeurs de décalage libres possibles. Le noeud secondaire 10b considéré choisit celles-ci le décalage le plus grand possible qui est inférieur au décalage de balise de son père.

Si aucun décalage vérifiant ces deux conditions n'est disponible, il choisit un décalage le plus grand possible qui est supérieur au décalage de balise de son père.

Ce choix de la valeur du décalage permet une collecte des informations plus rapide par le noeud principal 10a.

L'application de l'invention au cas décrit ci-dessus permet donc de recueillir des informations permettant la localisation de défauts thermiques sur une installation électrique tout en minimisant l'énergie utilisée par chacun des noeuds 10 de télécommunication et en optimisant la vitesse de collecte des informations par un noeud principal 10a.

Bien entendu, l'invention peut être utilisée à des fins de communication de données autres que des données relatives à la température et dans des contextes autres que les canalisations électriques.

## Revendications

1. Procédé de communication, sur un canal radio (14) dans un réseau comportant un noeud principal (10a) et une pluralité de noeuds secondaires (10b) de télécommunications,
**caractérisé en ce qu'**il comprend les étapes (100, 200, 210, 220, 230) suivantes :
- réception par un noeud secondaire (10b) sur le canal radio (14) de messages de balise (16) émis par des noeuds (10) de son voisinage radio, indiquant chacun un nombre de bonds radio séparant le noeud principal (10a) dudit noeud (10b) du voisinage radio ayant émis le message ;
- sélection en tant que noeud père par ledit noeud secondaire (10b), dit noeud (10) fils, du noeud (10) du voisinage radio ayant émis le message de balise (16) indiquant un nombre de bonds minimum ;
- en vue de transmettre une information (19) au noeud principal (10a), émission sur le canal radio (14) de ladite information (19) à destination dudit noeud (10) père ainsi sélectionné, de ladite information (19) ; et
**caractérisé en ce qu'**en vue de détecter l'émission à une première fréquence donnée de messages de balise (16) par des noeuds (10) dans son voisinage radio, et une période (T) type de longueur égale à une période inverse de la première fréquence étant découpée en plusieurs portions (P), au moins une portion (P₁) est écoutée par ledit noeud secondaire (10b) avec au moins une période de décalage par rapport à l'écoute d'une autre portion (P₂), ledit noeud secondaire (10b) étant mis en veille au moins pendant une partie du temps séparant les écoutes des deux portions.

2. Procédé de communication selon la revendication 1, selon lequel, en vue de transmettre une information (19) au noeud principal (10a), ladite information (19) est émise par ledit noeud secondaire (10b) exclusivement à destination dudit noeud (10) père.

3. Procédé de communication selon la revendication 1 ou 2, selon lequel ledit noeud secondaire (10b) émet périodiquement un message de balise (16) sur le canal radio (14) indiquant un nombre de bonds radio le séparant du noeud principal (10a) égal au nombre de bonds radio séparant le noeud principal (10a) de son noeud (10) père plus 1.

4. Procédé de communication selon l'une des revendications précédentes, **caractérisé en ce que**, pour émettre sur le canal radio (14) ladite information à destination dudit noeud père, le noeud fils détecte un message de balise (16) émis périodiquement par son noeud père définissant le début d'une plage temporelle où il est propre à recevoir des informations (19) du noeud fils, le noeud (10) fils transmettant les informations (19) au noeud père pendant cette plage.

5. Procédé de communication selon l'une des revendications précédentes, **caractérisé en ce que** le noeud fils émet un message de balise (16) périodiquement définissant le début d'une plage temporelle où il est propre à recevoir des informations (19) d'un noeud (10) de son voisinage radio.

6. Procédé de communication selon l'une quelconque des revendications précédentes, **caractérisé en ce qu'**une nouvelle portion (P₂) est écoutée dès que ledit noeud secondaire (10b) dispose d'un niveau d'alimentation suffisant pour l'écoute de ladite portion.

7. Procédé de communication selon l'une quelconque des revendications précédentes,, **caractérisé en ce que** la taille d'au moins une portion (P₁) est fonction du niveau courant d'alimentation dudit noeud (10).

8. Procédé de communication selon l'une des revendications précédentes, mis en oeuvre pour la surveillance thermique de canalisations électriques, **caractérisé en ce que** les noeuds (10) sont localisés au niveau de jonctions (2) de canalisations électriques, et comprennent en outre au moins un capteur de température, les informations (19) comportant des données indiquant au moins des températures mesurées par lesdits capteurs.

9. Station (10) émettrice et réceptrice, pour former un noeud apte à émettre et recevoir sur un canal radio (14) de communication, le noeud (10) appartenant à un réseau comportant un noeud principal (10a) et une pluralité de noeuds secondaires (10b) de télécommunications, ladite station (9) comprenant :
- des moyens de réception sur le canal radio (14) de messages respectif de balise (16) émis par des noeuds (10) de son voisinage radio, indiquant chacun un nombre de bonds radio séparant le noeud principal (10a) dudit noeud (10) du voisinage radio ayant émis le message ;
- des moyens de sélection en tant que noeud père dudit noeud (10) formé par la station, dit noeud fils, du noeud (10) du voisinage radio ayant émis le message de balise (16) indiquant un nombre de bonds minimum ;
- des moyens pour, en vue de transmettre une information (19) au noeud principal (10a), émettre sur le canal radio (14), ladite information (19) à destination dudit noeud père ainsi sélectionné ;
ladite station étant **caractérisée en ce qu'**elle comprend, en vue de détecter l'émission à une première fréquence donnée de messages de balise (16) par des noeuds (10) dans son voisinage radio, et une période type de longueur égale à une période égale à l'inverse de la première fréquence étant découpée en plusieurs portions, des moyens d'écoute d'au moins une portion (P₁) par ledit noeud secondaire (10b) avec au moins une période de décalage par rapport à l'écoute d'une autre portion (P₂), ledit noeud secondaire (10b) étant mis en veille au moins pendant une partie du temps séparant les écoutes de deux portions.

10. Station (10) émettrice et réceptrice selon la revendication 9, **caractérisée en ce qu'**elle comprend, en vue de transmettre une information (19) au noeud principal (10a), des moyens d'émission de ladite information (19), par ledit noeud secondaire (10b), exclusivement à destination dudit noeud (10) père.

11. Station (10) émettrice et réceptrice selon l'une des revendications 9 ou 10, **caractérisée en ce qu'**elle comprend des moyens d'émission périodique d'un message de balise (16) sur le canal radio (14), indiquant un nombre de bonds radio la séparant du noeud principal (10a) égal au nombre de bonds radio séparant le noeud principal (10a) de son noeuds père plus 1.

12. Station (10) émettrice et réceptrice selon l'une des revendications 9 à 11, **caractérisée en ce qu'**elle comprend, pour émettre sur le canal radio (14) ladite information (19) à destination dudit noeud père, des moyens de détection d'un message de balise (16) émis périodiquement par son noeud (10) père, définissant le début d'une plage temporelle où il est propre à recevoir des informations (19) de la station (9), la station transmettant les informations (19) au noeud père pendant cette plage.

13. Station (10) émettrice et réceptrice selon l'une des revendications 9 à 12, **caractérisée en ce qu'**elle comprend des moyens d'émission d'un message de balise (16) périodique définissant le début d'une plage temporelle où elle est propre à recevoir des informations (19) d'un noeud (10) de son voisinage radio.

14. Station (10) émettrice et réceptrice selon l'une quelconque des revendications 9 à 13, **caractérisée en ce qu'**elle comprend des moyens d'écoute d'une nouvelle portion (P₂) dès qu'elle dispose d'un niveau d'alimentation suffisant pour l'écoute de la dite portion.

15. Station (10) émettrice et réceptrice selon l'une quelconque des revendications 9 à 14, **caractérisée en ce que** la taille d'au moins une portion (P₁) est fonction du niveau courant d'alimentation de la station (10).

16. Station (10) émettrice et réceptrice selon l'une des revendications 9 à 15, **caractérisée en ce que** les informations (19) transmises par le noeud (10) père comprennent une adresse d'identification du noeud fils sur le réseau.

17. Station (10) émettrice et réceptrice selon l'une des revendications 9 à 16, pour la surveillance thermique de canalisations électriques, **caractérisée en ce qu'**elle est localisée au niveau d'une jonction (2) de canalisation électrique, et comprend en outre au moins un capteur de température (94), les informations (19) comportant des données indiquant au moins des températures mesurées par lesdits capteurs.

18. Programme d'ordinateur (PROG), à installer dans une station (10) émettrice et réceptrice pour former un noeud apte à émettre sur un canal radio (14), le noeud appartenant à un réseau comportant un noeud principal (10a) et une pluralité de noeuds secondaires (10b) de télécommunications, ledit programme (PROG) comprenant des instructions pour mettre en oeuvre, lors d'une exécution de programme par des moyens de traitement de ladite station émettrice et réceptrice, les étapes d'un procédé selon l'une des revendications 1 à 8.

## Patentansprüche

1. Kommunikationsverfahren über einen Funkkanal (14) in einem Netz, das einen Telekommunikations-Hauptknoten (10a) und eine Mehrzahl von Telekommunikations-Nebenknoten (10b) aufweist,
**dadurch gekennzeichnet, dass** es die folgenden Schritte (100, 200, 210, 220, 230) umfasst:
- über den Funkkanal (14) Empfangen von Auszeichnungsnachrichten (16) durch einen Nebenknoten (10b), die von Knoten (10) seiner Funkumgebung gesendet werden, wobei die Nachrichten jeweils eine Anzahl von Funksprüngen angeben, die den Hauptknoten (10a) von dem Knoten (10b) der Funkumgebung, der die Nachricht gesendet hat, trennt;
- Auswählen durch den Nebenknoten (10b), genannt Sohnknoten (10), des Knotens (10) der Funkumgebung, der die Auszeichnungsnachricht (16) gesendet hat, die eine minimale Anzahl von Sprüngen angibt, als Vaterknoten;
- um eine Information (19) an den Hauptknoten (10a) zu übertragen, Senden der Information (19) über den Funkkanal (14) an den so ausgewählten Vaterknoten (10); und
**dadurch gekennzeichnet, dass** zum Detektieren des Sendens von Auszeichnungsnachrichten (16) bei einer ersten vorgegebenen Frequenz durch Knoten (10) in seiner Funkumgebung, wobei eine Periode (T) mit einer Länge gleich einer zur ersten Frequenz inversen Periode, die in mehrere Abschnitte (P) aufgeteilt ist, mindestens ein Abschnitt (P₁) von dem Nebenknoten (10b) mit mindestens einer Versatzperiode in Bezug auf das Abhören eines anderen Abschnitts (P₂) abgehört wird, wobei der Nebenknoten (10b) mindestens während eines Teils der Zeit in einen Ruhemodus gebracht wird, der das jeweilige Abhören der zwei Abschnitte trennt.

2. Kommunikationsverfahren nach Anspruch 1, nach dem zum Übertragen einer Information (19) an den Hauptknoten (10a) die Information (19) von dem Nebenknoten (10b) exklusiv an den Vaterknoten (10) gesendet wird.

3. Kommunikationsverfahren nach Anspruch 1 oder 2, nach dem der Nebenknoten (10b) periodisch eine Auszeichnungsnachricht (16) auf dem Funkkanal (14) sendet, die eine ihn von dem Hauptknoten (10a) trennende Anzahl von Funksprüngen gleich der den Hauptknoten (10a) von seinem Vaterknoten (10) trennende Anzahl von Funksprüngen plus 1 angibt.

4. Kommunikationsverfahren nach einem der vorhergehenden Ansprüche, **dadurch gekennzeichnet, dass** zum Senden der Information an den Vaterknoten über den Funkkanal (14) der Sohnknoten eine Auszeichnungsnachricht (16) detektiert, die periodisch von seinem Vaterknoten gesendet wird und den Anfang eines Zeitbereichs definiert, indem es sinnvoll ist, Informationen (19) vom Sohnknoten zu empfangen, wobei der Sohnknoten (10) während dieses Bereichs die Informationen (19) an den Vaterknoten überträgt.

5. Kommunikationsverfahren nach einem der vorhergehenden Ansprüche, **dadurch gekennzeichnet, dass** der Sohnknoten periodisch eine Auszeichnungsnachricht (16) sendet, die den Anfang eines Zeitbereichs definiert, in dem er geeignet ist, Informationen (19) eines Knotens (10) seiner Funkumgebung zu empfangen.

6. Kommunikationsverfahren nach einem beliebigen der vorhergehenden Ansprüche, **dadurch gekennzeichnet, dass** ein neuer Abschnitt (P₂) abgehört wird, sobald der Nebenknoten (10b) über ein Versorgungsniveau verfügt, das ausreichend für das Abhören des Abschnitts ist.

7. Kommunikationsverfahren nach einem beliebigen der vorhergehenden Ansprüche, **dadurch gekennzeichnet, dass** die Größe mindestens eines Abschnitt (P₁) abhängig vom aktuellen Versorgungsniveau des Knotens (10) ist.

8. Kommunikationsverfahren nach einem der vorhergehenden Ansprüche, durchgeführt für die thermische Überwachung von Elektroleitungen, **dadurch gekennzeichnet, dass** die Knoten (10) an den Verbindungsstellen (2) von elektrischen Leitungen liegen und außerdem einen Wärmesensor umfassen, wobei die Informationen (19) Daten umfassen, die mindestens die von den Sensoren gemessenen Temperaturen angeben.

9. Sende- und Empfangsstation (10) zum Bilden eines Knotens, der geeignet ist, über einen Kommunikationsfunkkanal (14) zu senden und zu empfangen, wobei der Knoten (10) einem Netz angehört, das einen Hauptknoten (10a) und eine Mehrzahl von Nebenknoten (10b) für die Telekommunikation aufweist, wobei die Station (9) umfasst:
- Mittel zum Empfangen über den Funkkanal (14) von jeweiligen Auszeichnungsnachrichten (16), die von Knoten (10) ihrer Funkumgebung gesendet werden, wobei die Nachrichten jeweils eine Anzahl von Funksprüngen angeben, die den Hauptknoten (10a) von dem Knoten (10b) der Funkumgebung, der die Nachricht gesendet hat, trennt;
- Mittel zum Auswählen des Knotens (10), der von der Station gebildet wird, genannt Sohnknoten, des Knotens (10) der Funkumgebung, der die Auszeichnungsnachricht (16) gesendet hat, die eine minimale Anzahl von Sprüngen angibt, als Vaterknoten;
- in Hinblick auf das Übertragen einer Information (19) an den Hauptknoten (10a) Mittel zum Senden der Information (19) über den Funkkanal (14) an den so ausgewählten Vaterknoten;
wobei die Station **dadurch gekennzeichnet ist, dass** sie zum Detektieren des Sendens von Auszeichnungsnachrichten (16) bei einer ersten vorgegebenen Frequenz durch Knoten (10) in seiner Funkumgebung, wobei eine Periode (T) mit einer Länge gleich einer zur ersten Frequenz inversen Periode, die in mehrere Abschnitte (P) aufgeteilt ist, Mittel zum Abhören mindestens eines Abschnitts (P₁) von dem Nebenknoten (10b) mit mindestens einer Versatzperiode in Bezug auf das Abhören eines anderen Abschnitts (P₂), wobei der Nebenknoten (10b) mindestens während eines Teils der Zeit in einen Ruhemodus gebracht wird, der das jeweilige Abhören der zwei Abschnitte trennt.

10. Sende- und Empfangsstation (10) nach Anspruch 9, **dadurch gekennzeichnet, dass** sie für das Senden einer Information (19) an den Hauptknoten (10a) Mittel zum Senden der Information (19) von dem Nebenknoten (10b) exklusiv an den Vaterknoten (10) umfasst.

11. Sende- und Empfangsstation (10) nach einem der Ansprüche 9 oder 10, **dadurch gekennzeichnet, dass** sie Mittel zum periodischen Senden einer Auszeichnungsnachricht (16) auf dem Funkkanal (14) umfasst, die eine sie von dem Hauptknoten (10a) trennende Anzahl von Funksprüngen gleich der den Hauptknoten (10a) von ihrem Vaterknoten (10) trennende Anzahl von Funksprüngen plus 1 angibt.

12. Sende- und Empfangsstation (10) nach einem der Ansprüche 9 bis 11, **dadurch gekennzeichnet, dass** sie zum Senden der Information (19) an den Vaterknoten über den Funkkanal (14) Mittel zum Detektieren einer Auszeichnungsnachricht (16) umfasst, die periodisch von ihrem Vaterknoten (10) gesendet wird und den Anfang eines Zeitbereichs definiert, in dem es geeignet ist, Informationen (19) von der Station (9) zu empfangen, wobei die Station die Informationen (19) während dieses Bereichs an den Vaterknoten überträgt.

13. Sende- und Empfangsstation (10) nach einem der Ansprüche 9 bis 12, **dadurch gekennzeichnet, dass** sie Mittel zum Senden einer periodischen Auszeichnungsnachricht (16) umfasst, die den Anfang eines Zeitbereichs definiert, in dem sie geeignet ist, Informationen (19) eines Knotens (10) ihrer Funkumgebung zu empfangen.

14. Sende- und Empfangsstation (10) nach einem beliebigen der Ansprüche 9 bis 14, **dadurch gekennzeichnet, dass** sie Mittel zum Abhören eines neuen Abschnitts (P₂) umfasst, sobald sie über ein ausreichendes Versorgungsniveau zum Abhören des Abschnitts verfügt.

15. Sende- und Empfangsstation (10) nach einem beliebigen der Ansprüche 9 bis 14, **dadurch gekennzeichnet, dass** die Größe mindestens eines Abschnitts (P₁) abhängig vom aktuellen Versorgungsniveau der Station (10) ist.

16. Sende- und Empfangsstation (10) nach einem der Ansprüche 9 bis 15, **dadurch gekennzeichnet, dass** die von dem Vaterknoten (10) übertragenen Informationen (19) eine Identifikationsadresse des Sohnknotens in dem Netz umfassen.

17. Sende- und Empfangsstation (10) nach einem der Ansprüche 9 bis 16 für die thermische Überwachung von elektrischen Leitungen, **dadurch gekennzeichnet, dass** sie an einer Verbindungstelle (2) der elektrischen Leitungen liegt und außerdem mindestens einen Temperatursensor (94) umfasst, wobei die Informationen (19) Daten umfassen, die mindestens die von den Sensoren gemessenen Temperaturen angeben.

18. Rechenprogramm (PROG), das in einer Sende- und Empfangsstation (10) zu installieren ist, um einen Knoten zu bilden, der geeignet ist, über einen Funkkanal (14) zu senden, wobei der Knoten zu einem Netz gehört, das einen Telekommunikations-Hauptknoten (10a) und eine Mehrzahl von Telekommunikations-Nebenknoten (10b) umfasst, wobei das Programm (PROG) bei einer Ausführung des Programms durch Bearbeitungsmittel der Sende- und Empfangsstation Instruktionen zum Durchführen der Schritten eines Verfahrens nach einem der Ansprüche 1 bis 8 umfasst.

## Claims

1. A communication method, over a radiofrequency channel (14) in a network including a primary node (10a) and multiple secondary nodes (10b) for telecommunications,
**characterized in that** it comprises the following steps (100, 200, 210, 220, 230):
- reception by a secondary node (10b) on the radiofrequency channel (14) of beacon messages (16) sent by the nodes (10) in its radio neighborhood, each indicating a number of radio hops separating the primary node (10a) from said node (10b) of the radio neighborhood having sent the message;
- selection by said secondary node (10b), called child node (10), of the node (10) from the wireless neighborhood having sent the beacon message (16) indicating a minimum number of hops as the parent node;
- in order to send information (19) to the primary node (10a), transmission of said information (19) over the radiofrequency channel (14) to said parent node (10) thus selected; and
**characterized in that** in order to detect the emission at a first given frequency of beacon messages (16) by nodes (10) in its wireless neighborhood, and a standard period (T) with a length equal to an inverse period relative to the first frequency being divided into several portions (P), at least one portion (P1) is listened to by said secondary node (10b) with at least one offset period relative to the listening to another portion (P2), said secondary node (10b) being put on standby for at least part of the time separating the two listening operations for the two portions.

2. The communication method according to claim 1, wherein, in order to send information (19) to the primary node (10a), said information (19) is emitted by said secondary node (10b) only to said parent node (10).

3. The communication method according to claim 1 or 2, wherein said secondary node (10b) periodically emits a beacon message (16) on the radiofrequency channel (14) indicating a number of radio hops separating it from the primary node (10a) equal to the number of radio hops separating the primary node (10a) from the parent node (10) plus 1.

4. The communication method according to one of the preceding claims, **characterized in that**, to emit said information on the radiofrequency channel (14) to said parent node, the child node detects a beacon message (16) periodically emitted by its parent node defining the beginning of a time window where it is able to receive information (19) from the child node, the child node (10) sending the information (19) to the parent node during that window.

5. The communication method according to one of the preceding claims, **characterized in that** the child node periodically emits a beacon message (16) defining the beginning of a time window where it can receive information (19) from a node (10) in its wireless neighborhood.

6. The communication method according to any one of the preceding claims, **characterized in that** a new portion (P₂) is listened to as soon as said secondary node (10b) has a sufficient power level to listen to said portion.

7. The communication method according to any one of the preceding claims, **characterized in that** the size of at least one portion (P₁) depends on the power supply current level of said node (10).

8. The communication method according to one of the preceding claims, implemented to monitor the heat of wiring systems, **characterized in that** the nodes (10) are located at the wiring system junctions (2), and further comprise at least one temperature sensor, the information (19) including data indicating at least temperatures measured by said sensors.

9. A transceiver station (10), to form a node capable of transmitting and receiving on a radiofrequency communication channel (14), the node (10) belonging to a network including a primary node (10a) and multiple secondary nodes (10b) for telecommunications, said station (9) comprising:
- means for receiving respective beacon messages (16) on the radiofrequency channel (14) that are transmitted by nodes (10) in its radio neighborhood, each indicating a number of radio hops separating the primary node (10a) from said node (10) of the radio neighborhood that transmitted the message;
- means for selecting, as the parent node (10) of said node formed by the station, called child node, the node (10) from the radio neighborhood having transmitted the beacon message (16) indicating a minimum number of hops;
- means for transmitting information (19) to said parent node (10a) thus selected on the radiofrequency channel (14) in order to send said information (19) to the primary node thus selected:
said station being **characterized in that** in order to detect the transmission of beacon messages (16) at a first given frequency by nodes (10) in its radio neighborhood, and a standard period with a length equal to a period equal to the inverse of the first frequency being divided into several portions, it comprises means for listening to at least one portion (P₁) by said secondary node (10b) with at least one offset period relative to the listening to another portion (P₂), said secondary node (10b) being put on standby at least for part of the time separating the listening to the two portions..

10. The transceiver station (10) according to claim 9, **characterized in that** to send information (19) to the primary node (10a), it comprises means for transmitting said information (19), through said second node (10b), exclusively to said parent node (10).

11. The transceiver station (10) according to one of claims 9 or 10, **characterized in that** it comprises means for periodically transmitting a beacon message (16) on the radiofrequency channel (14), indicating a number of radio hops separating it from the primary node (10a) equal to the number of radio hops separating the primary node (10a) from its parent node plus 1.

12. The transceiver station (10) according to one of claims 9 to 11, **characterized in that** to transmit said information (19) over the radiofrequency channel (14) to said parent node, it comprises means for detecting a beacon message (16) periodically transmitted by its parent node (10), defining the beginning of a time window where it is able to receive information (19) from the station (9), the station sending the information (19) to the parent node during that window.

13. The transceiver station (10) according to one of claims 9 to 12, **characterized in that** it comprises means for sending a periodic beacon message (16) defining the beginning of a time window where it is capable of receiving information (19) from a node (10) in its radio neighborhood.

14. The transceiver station (10) according to one of claims 9 to 13, **characterized in that** it comprises means for listening to a new portion (P₂) as soon as it has a sufficient power level to listen to said portion.

15. The transceiver station (10) according to one of claims 9 to 14, **characterized in that** the size of at least one portion (P₁) depends on the power current level of the station (10).

16. The transceiver station (10) according to one of claims 9 to 15, **characterized in that** the information (19) sent by the parent node (10) comprises an address for identifying the child node on the network.

17. The transceiver station (10) according to one of claims 9 to 16, for thermal monitoring of wiring systems, **characterized in that** it is located at a wiring system junction (2), and further comprises at least one temperature sensor (94), the information (19) including data indicating at least the temperatures measured by said sensors.

18. A computer program (PROG), to be installed in a transceiver station (10) to form a node capable of transmitting over a radiofrequency channel (14), the node belonging to a network including a primary node (10a) and multiple secondary nodes (10b) for telecommunications, said program (PROG) comprising instructions for carrying out the steps of a method according to one of claims 1 to 8 when the program is run by processing means of said transceiver station.
